# FASCICULE DE BREVET EUROPEEN

(11) **EP 2 530 449 B1**
(45) Date de publication et mention de la délivrance du brevet: **23.04.2014**
(21) Numéro de dépôt: 11305684.0
(22) Date de dépôt: 03.06.2011
(51) Int. Cl.: G01M 5/00, G01N 3/32, G01M 99/00

(54) **Procédé de détermination du capital fatigue d'un cable**
Verfahren zur Bestimmung des Ermüdungskapitals eines Kabels
Method for determining the fatigue capital of a cable

(43) Date de publication de la demande: 05.12.2012
(73) Titulaire: Soletanche Freyssinet, 92500 Rueil Malmaison (FR)
(72) Inventeur: Hovhanessian, Gilles, 92160 Antony (FR); Chaperon, Alexandre, F-75015 Paris (FR); Mellier, Erik, F-78220 Viroflay (FR)
(74) Mandataire: Cabinet Plasseraud

(56) Documents cités:
- Gilles Hovhanessian: "Health Monitoring of Cable Stayed Structures Experience and Implementation", Conference: 2006 IMAC-XXIV: Conference & Exposition on Structural Dynamics, 12 novembre 2010 (2010-11-12), XP55010940, Extrait de l'Internet: URL:http://sem-proceedings.com/24i/sem.org -IMAC-XXIV-Conf-s17p02-Health-Monitoring-C able-Stayed-Structures-Experience-Implemen tation.pdf [extrait le 2011-11-01]
- D Siegert ET AL: "Fatigue of stay cables inside end fittings high frequencies of wind induced vibrations", , 13 juillet 2004 (2004-07-13), XP55011112, Extrait de l'Internet: URL:http://media.lcpc.fr/ext/pdf/pres/div_ macoa/sources_article_oipeec.pdf [extrait le 2011-11-03]
- M Poser ET AL: "Bending Fatigue Tests on Stays Cables", , 13 juillet 2008 (2008-07-13), XP55011117, Extrait de l'Internet: URL:http://posereng.com/downloads/BendingF atiguePaper2002.PDF [extrait le 2011-11-03]
- LI H ET AL: "Applications of optical fibre Bragg gratings sensing technology-based smart stay cables", OPTICS AND LASERS IN ENGINEERING, ELSEVIER, vol. 47, no. 10, 1 octobre 2009 (2009-10-01), pages 1077-1084, XP026470030, ISSN: 0143-8166, DOI: 10.1016/J.OPTLASENG.2009.04.016 [extrait le 2009-05-20]
- JAN MING KO: "Field vibration tests of bridge stay cables incorporated with magnetorheological (MR) dampers", PROCEEDINGS OF SPIE, vol. 4696, 1 janvier 2002 (2002-01-01), pages 30-40, XP55011120, ISSN: 0277-786X, DOI: 10.1117/12.472567

## Description

La présente invention se rapporte à un procédé de détermination du capital fatigue d'un câble supportant une structure de génie civil ainsi qu'à un dispositif permettant de déterminer le capital fatigue d'un tel câble.

Un grand nombre de structures de génie civil sont supportées par des câbles, en particulier, mais pas exclusivement, les ponts à câbles ou les ponts suspendus.

Ces câbles sont généralement ancrés à la structure de génie civil par un moyen d'ancrage qui peut être assimilé à un encastrement éventuellement imparfait. Il en résulte que les câbles sont soumis en plus de l'effort de tension longitudinal à des efforts de flexion parasites qui créent localement des contraintes de flexion.

Les câbles sont soumis à divers type de sollicitations, en particulier des sollicitations dites statiques et dynamiques.

Les sollicitations statiques sont généralement dues à des variations lentes, par exemple des variations de températures, ou des variations globales de chargement de la structure de génie civil.

Les sollicitations dynamiques correspondent à des variations plus rapides, par exemple des rafales de vent ou le passage d'un camion sur la structure de génie civil.

Les contraintes qui découlent de ces sollicitations, même si elles sont inférieures à la capacité de résistance du câble, peuvent conduire à la rupture dudit câble si elles sont répétées un trop grand nombre de fois. On parle alors de rupture par fatigue du matériau constituant le câble.

Il existe des règles de calcul permettant de vérifier que les dimensions des câbles sont compatibles avec les sollicitations auxquelles la structure devrait être soumise pendant sa durée de vie.

Généralement, ces règles de calcul consistent, dans un premier temps, à déterminer le capital fatigue ou encore le capital initial du câble. Dans un deuxième temps, on évalue les sollicitations auxquelles va être soumise la structure au cours de sa vie ainsi que la fréquence de ces sollicitations. Finalement, on vérifie que ces sollicitations évaluées n'entament que partiellement le capital initial du câble.

Les câbles sont sujets à la fatigue, notamment dans leur zone d'ancrage où les fluctuations de tension ou contraintes axiales se cumulent avec des contraintes de flexion. Les contraintes de flexion peuvent être importantes car le câble subit des variations angulaires qui font que ledit câble n'est pas parfaitement aligné avec l'ancrage. La fluctuation de cet angle d'ancrage due aux mouvements de la structure, aux vibrations du câble ou encore à la variation de sa chaînette liée aux variations de tension, rendent les contraintes de flexion variables et importantes.

Si des calculs permettent d'évaluer lors de la conception l'endommagement en fatigue des câbles et donc leur durée de vie, ces calculs sont limités par les hypothèses de départ.

Par exemple, dans le cas d'un pont, la fatigue des câbles liée au trafic automobile sur le pont est basée sur des estimations qui peuvent être dépassées dans le temps.

Par ailleurs, les effets dynamiques liés aux passages de convois, notamment des convois de poids lourds, ne sont à ce jour pas bien appréciés par le calcul. Enfin, certains effets dynamiques, liés à l'état de la chaussée, ne sont tout simplement pas prédictibles.

Les effets dynamiques du vent sont par ailleurs difficilement quantifiables. Les vibrations, leur amplitude et les fréquences d'occurrence sont largement inconnues lors de la conception du système.

Il est donc intéressant de pouvoir suivre l'évolution du capital fatigue initial du câble supportant une structure au cours de la vie de ladite structure.

De cette manière, des actions de maintenance ou d'amélioration peuvent être planifiées en cas de consommation anormalement rapide du capital fatigue ou lorsque celui-ci est quasiment épuisé.

L'article de Gilles Hovhanessian, « Health Monitoring of Cable Stayed Structures: Expérience and Implementation », 2006 IMAC-XXIV, Conference & Exposition on Structural Dynamics, novembre 2010, XP55010940, décrit des techniques de surveillance de charge et d'observation de réponse de structures haubanées.

Un objet de la présente invention est de fournir un procédé permettant de déterminer le capital fatigue d'un câble supportant une structure de génie civil.

L'invention propose ainsi un procédé de détermination du capital fatigue d'un câble supportant une structure de génie civil, le procédé étant défini dans la revendication 1 annexée. Des modes de réalisation de ce procédé sont en outre définies dans les revendications 2-9. Avantageusement, le procédé selon l'invention permet de connaitre le chargement réel subi par le câble, et par extrapolation d'estimer le chargement passé et futur et l'évolution du capital fatigue dudit câble.

Un procédé de détermination du capital fatigue d'un câble selon l'invention peut en outre comporter l'une ou plusieurs des caractéristiques optionnelles ci-dessous, considérées individuellement ou selon toutes les combinaisons possibles:
- la mesure de l'effort de flexion dans le câble est réalisé à partir d'une ou plusieurs jauges de déformation placées sur ou dans l'ancrage ou sur le câble ; et/ou
- la mesure des déplacements est obtenue à l'aide de mesures accélérométriques intégrées deux fois ; et/ou
- la mesure des déplacements est obtenue à l'aide des vitesses obtenues par un géophone intégrées une fois ; et/ou
- l'étape de mesure est réalisée pendant une période de mesure la plus courte possible pour rester économique, mais suffisamment longue pour être représentative et permettre une extrapolation réaliste des chargements antérieurs et postérieurs à la période de mesure ; cette durée est typiquement de l'ordre de la semaine ou du mois ; et/ou
- le capteur de déplacement utilisé pour la mesure de flexion est intégré à un amortisseur utilisé pour limiter les vibrations des câbles ; et/ou
- le capteur de déplacement intégré à l'amortisseur est également utilisé pour mesurer la course cumulée de l'amortisseur et suivre son vieillissement.

L'invention se rapporte également à un dispositif permettant de déterminer le capital fatigue d'un câble supportant une structure de génie civil, le dispositif étant défini dans la revendication 10, avec un mode de réalisation particulier définie dans la revendication 11.

L'invention sera mieux comprise à la lecture de la description qui va suivre, donnée uniquement à titre d'exemple et faite en se référant aux dessins annexés dans lesquels:
- la figure 1 illustre les différentes étapes d'un procédé selon un mode de réalisation de l'invention, et
- la figure 2 est une vue schématique d'un pont à haubans comportant un dispositif selon l'invention.

Pour des raisons de clarté, les différents éléments représentés sur les figures ne sont pas nécessairement à l'échelle.

L'invention vise à permettre de déterminer le capital fatigue d'au moins un câble supportant une structure de génie civil. La structure de génie civil peut être de toute nature, en particulier un pont suspendu ou un pont à câble.

Selon un mode de réalisation, un procédé selon l'invention comprend :
- une étape de mesure en traction S1,
- une étape de mesure en flexion S2,
- une étape de comptage S3, et
- une étape de détermination du capital fatigue du câble S4.

Au cours des étapes de mesure en traction S1 et de mesure en flexion S2, les mesures sont réalisées de façon à estimer les contraintes là ou les efforts sont maximum, soit en général, dans la zone d'ancrage du câble de la structure de génie civil. De plus, les étapes de mesure en traction S1 et de mesure en flexion S2 sont réalisées de manière synchronisée de sorte à obtenir l'effort composé dans le câble.

Selon un mode de réalisation de l'invention, au cours de l'étape de mesure en traction S1, la mesure de l'effort normal de traction dans le câble peut être réalisée directement par tout moyen connu de l'homme du métier. Par exemple, la mesure de l'effort normal en traction peut être réalisée au moyen d'une cellule d'effort. Nous appelons ici « cellule d'effort », un capteur spécifiquement conçu pour mesurer la tension dans le câble ou un des torons du câble. Il existe de très nombreux capteurs de ce type. Avantageusement, ce mode de réalisation fournit une information directement utilisable.

Selon un autre mode de réalisation de l'invention, au cours de l'étape de mesure en traction S1, la mesure de l'effort normal de traction dans le câble peut être réalisée indirectement par tout moyen connu de l'homme du métier. Par exemple, la mesure de l'effort normal en traction peut être réalisée au moyen d'une jauge de déformation placée sur l'ancrage. Nous appelons ici « jauge de déformation », un capteur permettant de mesurer la variation de la déformation de l'acier associée à une variation d'effort. Ces capteurs sont parfois, par abus de langage, appelé jauges de contrainte, car la connaissance du module de l'acier permet de calculer la contrainte locale à partir de la déformation. (σ = E ε.). Il existe de très nombreux capteurs de ce type, fonctionnant sur des principes électriques ou optiques. Une interprétation et éventuellement une étape de calibration peuvent dans ce cas être nécessaires pour estimer la tension du câble à partir des mesures fournies par les capteurs. Ce mode de réalisation est en général utilisé lorsque la mesure directe n'est pas possible, par exemple lorsqu'il n'est pas possible de mettre en place le capteur.

Une autre façon de mesurer indirectement l'effort normal de traction dans un câble multibrins tendu suivant une méthode de type isotension assurant une similitude de tension entre les brins (par exemple comme décrit dans EP0421862) peut se baser sur une mesure de force sur un brin.

Une autre façon encore de mesurer indirectement l'effort normal de traction dans le câble peut mettre en oeuvre la méthode de la corde vibrante et utiliser une mesure des fréquences propres de vibration du câble.

Au cours de l'étape de mesure en flexion, l'effort de flexion dans le câble est mesuré à proximité de l'ancrage dudit câble à la structure, par exemple au niveau de l'ancrage.

Selon un mode de réalisation de l'invention, la mesure en flexion peut être réalisée en mesurant l'inclinaison relative du câble par rapport à son ancrage dans la structure de génie civil.

Selon un mode de réalisation de l'invention, la mesure de l'effort de flexion dans le câble peut être réalisée directement par tout moyen connus de l'homme du métier.

Par exemple à partir d'une ou de plusieurs jauges de déformation placées sur ou dans l'ancrage ou sur le câble. On pourra par exemple, avantageusement utiliser le même type de jauges que celles utilisées pour la mesure axiale.

Selon un mode de réalisation de l'invention, la mesure de l'effort de flexion dans le câble peut être réalisée indirectement par tout moyen connu de l'homme du métier. Par exemple à partir d'une mesure des déplacements du câble dans un plan coupant son axe, par exemple perpendiculaire à son axe, et à une distance prédéterminée de l'ancrage. Avantageusement, ce mode de réalisation ne requiert pas d'accès à la zone de flexion maximale qui souvent est difficile, ni la mise en place de capteurs permettant une mesure directe qui est souvent impossible à cet endroit.

L'effort global de flexion peut être déterminé au moyen d'un capteur permettant de mesurer l'angle que fait le câble avec son ancrage. Cette mesure de l'angle permet par calcul de connaître les contraintes de flexion subies par le câble.

Afin de mesurer l'effort de flexion dans le câble, il est possible d'utiliser des inclinomètres. Selon un mode de réalisation de l'invention, on dispose un premier inclinomètre sur le câble à la sortie de l'ancrage permettant de connaître l'inclinaison absolue dudit câble.

Un deuxième inclinomètre disposé sur la structure au voisinage de l'ancrage permet de connaître l'inclinaison absolue de ladite structure. La différence des inclinaisons permet de connaître l'inclinaison relative du câble dans son ancrage, l'ancrage étant solidaire de la structure.

Selon un autre mode de réalisation, il est possible de déterminer l'effort de flexion au niveau de l'ancrage en mesurant le déplacement du câble par rapport à la structure à une certaine distance de l'ancrage.

De préférence, cette distance est suffisamment grande pour que les déplacements soient significatifs et mesurables, et suffisamment petite pour pouvoir simplifier le calcul en assimilant le câble à une poutre encastrée soumise à un effort à l'extrémité. L'ordre de grandeur typique est de 1 à 10m.

Le calcul de l'effort de flexion à partir du déplacement mesuré doit être adapté à la configuration du câble et de l'ancrage (dimensions, présence de déviateur, ...)

Par exemple, pour les câbles dont l'ancrage bas se situe dans le tablier d'un pont, la distance correspondant à la sortie du tube coffrant est bien adaptée.

Sur certains ponts, la sortie du tube coffrant est équipée d'un amortisseur. Le capteur de déplacement peut alors avantageusement être intégré à l'amortisseur. Il permet alors, en plus d'évaluer l'effort de flexion dans le câble à la sortie de l'ancrage, de suivre la course cumulée de l'amortisseur, paramètre important pour suivre son vieillissement et programmer sa maintenance. Cette mesure peut être réalisée par des capteurs de déplacement, ou encore par une prise de vue vidéo associée à une analyse d'image ou par tout autre moyen connu de l'homme du métier.

Selon un mode de réalisation de l'invention, les étapes de mesure en traction S1 et de mesure en flexion S2 peuvent être réalisées à des fréquences supérieures ou égales à 1Hz, par exemple supérieures ou égales à 10 Hz et inférieures ou égales à 1 kHz, par exemple inférieures ou égales à 500 Hz, ou encore inférieures ou égales à 100 Hz. En pratique, une valeur de quelques Hz (disons 10Hz pour un ouvrage « souple » à 50Hz pour un ouvrage « raide ») est en général suffisante pour mesurer les vibrations associées aux premiers modes propres de vibration.

Toutefois, il peut être avantageux de sur échantillonner pour mesurer les vibrations liées au trafic ou mettre en place des filtrages numériques et éviter les phénomènes de repliement.

De préférence, la fréquence de mesure est adaptée de manière à pouvoir rendre compte du plus grand nombre possible de variations d'effort dans le câble, et en particulier des valeurs extrémales atteintes au cours de chaque cycle.

Les fréquences propres de vibration du câble et la vitesse des convois au voisinage du câble peuvent être prises en compte. Typiquement, une quarantaine de mesures sont effectuées par cycle d'oscillation et une mesure est prise tous les 10 cm environ lors du passage d'un convoi à vitesse maximale.

Par exemple, pour un convoi roulant à 100km/h, soit 100000/3600 m/s, avec une mesure prise tous les 10 cm, les données sont enregistrées à une fréquence de 100000/0.1/3600= environ 300Hz.

Les étapes de mesure en traction S1 et de mesure en flexion S2 sont réalisées pendant une période de mesure la plus courte possible pour rester économique, mais suffisamment longue pour être représentative et permettre une extrapolation réaliste des chargements antérieurs et postérieurs à la période de mesure. Cette durée est typiquement de l'ordre de la semaine ou du mois.

Le procédé selon l'invention comprend en outre une étape de comptage au cours de laquelle, à partir de l'effort composé et mesuré, est réalisé un comptage du nombre de cycle d'effort en fonction de l'amplitude de l'effort.

Selon un mode de réalisation de l'invention, l'étape de comptage est réalisée au moyen d'un comptage du type de la goutte d'eau ("rainflow" en anglais).

Le comptage du type de la goutte d'eau est utilisé pour traduire le chargement en contrainte en fonction du temps en cycles de contraintes simples caractérisés par une contrainte minimum et une contrainte maximum. Il s'agit de décomposer le chargement en associant par paires les minima croissants et les maxima décroissants. Toutefois, cette association nécessiterait d'analyser *a posteriori* le chargement complet en fonction du temps et il faudrait garder l'historique complet du chargement. Pour éviter ce stockage, un algorithme associe des paires de minima et maxima pour obtenir des cycles partiels au cours du chargement.

L'étape de détermination du capital fatigue du câble permet de déterminer le capital fatigue du câble en comparant le comptage effectué lors de l'étape de comptage avec une courbe de type Wöhler préalablement établie pour le câble.

La courbe de Wöhler définit une relation entre la contrainte appliquée *σ, sigma* parfois notée S, et le nombre de cycles à la rupture NR, autrement dit le nombre de cycles pour lequel on observe P% de ruptures. En pratique, la courbe de Wöhler est généralement donnée pour une probabilité de rupture P = 0,5.

Avantageusement, l'historique ou l'extrapolation des efforts passés peut être comparé avec la fatigue réellement subie par le câble afin de vérifier les hypothèses prévues au moment de la construction de l'ouvrage.

En outre, il est possible d'utiliser des extrapolations d'efforts futurs pour estimer une capacité ou une durée de vie résiduelle du câble vis-à-vis de la fatigue.

L'invention se rapporte également à un dispositif permettant de déterminer le capital fatigue d'un câble supportant une structure de génie civil.

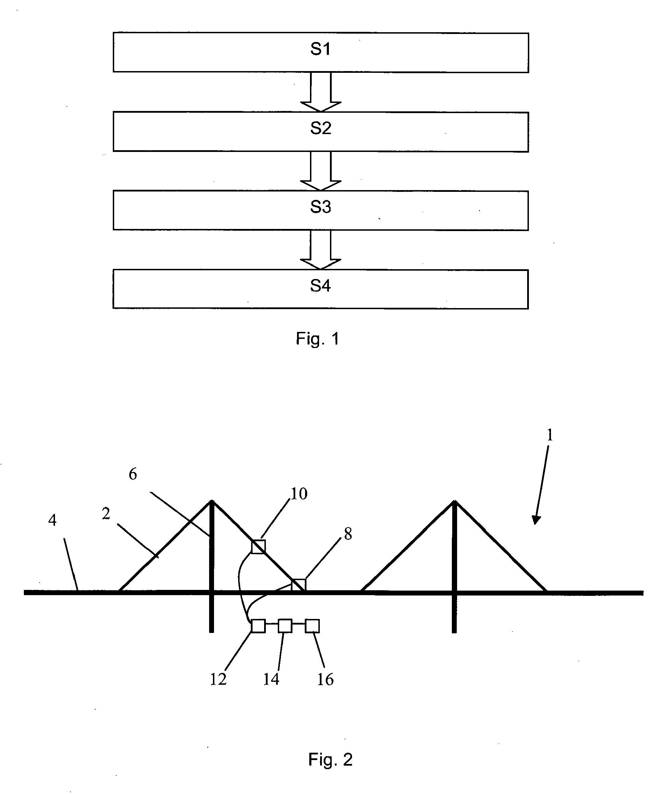

Un exemple de structure de génie civil supportée par des câbles est représenté sur la figure 2.

La figure 2 représente une vue schématique d'un pont à haubans 1. Le pont à haubans 1 comprend des câbles obliques 2 partant d'un pylône 6 et supportant le tablier 4.

Le pont représenté sur la figure 2 est équipé d'un dispositif selon un mode de réalisation de l'invention.

Des moyens de mesure de l'effort global en traction 8 dans le câble sont disposés au niveau de l'ancrage du câble 2 au tablier 4.

Des moyens de mesure de l'effort global en flexion 10 dans le câble 2 sont disposés le long du câble 2.

Les moyens de mesure de l'effort global en traction 8 et en flexion 10 sont reliés à un moyen de comptage 12. Le moyen de comptage 12 permet de compter le nombre de cycles d'effort en fonction de l'amplitude des efforts en traction et en flexion subis par le câble. Le moyen de comptage peut par exemple être un processeur programmé de sorte à réaliser le décompte.

Selon le mode de réalisation de la figure 2, le moyen de comptage 12 transmet à des moyens de comparaison 14 le résultat du comptage effectué. Les moyens de comparaison 14 permettent de comparer le comptage effectué par le moyen de comptage avec une courbe de type Wöhler préalablement établie pour le câble 2.

Selon un mode de réalisation, le dispositif selon l'invention peut comprendre des moyens d'alerte 16 permettant de signaler lorsque la capacité du câble ou sa durée de vie résiduelle est réduite en dessous d'un seuil prédéterminé.

L'invention ne se limite pas aux modes de réalisation décrits et doit être interprétée de façon limitée seulement par les revendications.

## Revendications

1. Procédé de détermination du capital fatigue d'un câble supportant une structure de génie civil, le procédé comprenant :
- une étape de mesure (S1, S2), au cours de laquelle l'effort normal de traction dans le câble et l'effort de flexion dans le câble sont mesurés de façon synchronisée de sorte à obtenir l'effort composé dans le câble,
- une étape de comptage (S3), au cours de laquelle à partir des efforts composés mesurés, un comptage du nombre de cycle d'effort en fonction de l'amplitude de l'effort est réalisé,
- une étape d'évaluation du capital fatigue du câble (S4), au cours de laquelle le capital fatigue du câble est déterminé en comparant le comptage effectué lors de l'étape de comptage avec une courbe de type Wöhler préalablement établie pour le câble,
dans lequel la mesure de l'effort de flexion dans le câble est réalisée indirectement, par exemple à partir d'une mesure des déplacements du câble dans un plan coupant son axe et à une distance connue de l'ancrage, et dans lequel la mesure des déplacements du câble est réalisée dans un amortisseur placé sur le câble pour en amortir les vibrations transversales.

2. Procédé selon l'une la revendication précédente, dans lequel la mesure de l'effort normal de traction dans le câble est réalisée directement, par exemple à l'aide d'une cellule d'effort.

3. Procédé selon la revendication 1, dans lequel la mesure de l'effort normal de traction dans le câble est réalisée indirectement, par exemple à l'aide d'une jauge de déformation placée sur l'ancrage ou sur le câble, à l'aide d'une mesure de force sur un brin parmi une pluralité de brins du câble, ou encore par la méthode de la corde vibrante et à l'aide d'une mesure des fréquences propres de vibration du câble.

4. Procédé selon l'une quelconque des revendications précédentes, dans lequel les mesures en traction et/ou en flexion sont réalisées à une fréquence de l'ordre 1Hz à 1kHz.

5. Procédé selon l'une quelconque des revendications précédentes, dans lequel l'étape de mesure n'est pas réalisée en continue depuis l'installation du câble, et selon laquelle les données mesurées sont utilisées pour réaliser une extrapolation des chargements antérieurs et postérieurs à la période de mesure.

6. Procédé selon l'une quelconque des revendications précédentes, dans lequel l'étape de mesure est réalisée en continue depuis l'installation du câble de sorte à mesurer les efforts en traction et en flexion dans le câble depuis son installation.

7. Procédé selon l'une quelconque des revendications précédentes, dans lequel l'étape de comptage est réalisée au moyen d'un comptage du type de la goutte d'eau.

8. Procédé selon l'une quelconque des revendications précédentes, dans lequel l'historique ou l'extrapolation des efforts passés est utilisé pour comparer la fatigue réellement subie par le câble avec les hypothèses prévues au moment de la construction.

9. Procédé selon l'une quelconque des revendications précédentes, dans lequel des extrapolations d'efforts futurs sont utilisées pour estimer une capacité ou une durée de vie résiduelle du câble vis-à-vis de la fatigue.

10. Dispositif permettant de déterminer le capital fatigue d'un câble (2) supportant une structure de génie civil (1), le dispositif comprenant des moyens de mise en oeuvre d'un procédé selon l'une quelconque des revendications précédentes, à savoir comprenant :
- des moyens de mesure de l'effort global en traction (8) dans le câble (2),
- des moyens de mesure de l'effort global en flexion (10) dans le câble (2) à l'aide d'un capteur intégré à un amortisseur que comprend un dispositif d'ancrage du câble à la structure de génie civil,
- des moyens de comptage (12) du nombre de cycle d'effort en fonction de l'amplitude des efforts en traction et en flexion subis par le câble, et
- des moyens de comparaison (14) du comptage effectué par les moyens de comptage avec une courbe de type Wöhler préalablement établie pour le câble.

11. Dispositif selon la revendication 10 comprenant en outre des moyens d'alerte (16) permettant d'être automatiquement informé lorsque la capacité du câble ou sa durée de vie résiduelle est réduite en dessous d'un seuil prédéterminé.

## Patentansprüche

1. Verfahren zur Bestimmung des Ermüdungskapitals von einem Seil, welches eine Bauwesen-Struktur abstützt oder trägt, wobei das Verfahren umfasst:
- einen Mess-Schritt (S1, S2), bei dem die Normal-Zug-Belastung in dem Seil und die Biege-Belastung in dem Seil synchronisiert gemessen werden, um eine zusammengesetzte Belastung in dem Seil zu erhalten,
- einen Zähl-Schritt (S3), bei dem ausgehend von den gemessenen zusammengesetzten Belastungen eine Zählung der Anzahl von Belastungszyklen in Abhängigkeit von der Belastungsamplitude durchgeführt wird,
- einen Auswertungs-Schritt (S4) für das Ermüdungskapital des Seils, bei dem das Ermüdungskapital des Seils bestimmt wird, indem die bei dem Zähl-Schritt ausgeführte Zählung mit einer zuvor für das Seil etablierten Kurve vom Wöhler-Typ verglichen wird,
wobei die Messung der Biege-Belastung in dem Seil indirekt ausgeführt wird, beispielsweise ausgehend von einer Messung der Verlagerungen des Seils in einer Ebene, welche seine Achse schneidet, und in einem bekannten Abstand von der Verankerung, und wobei die Messung der Verlagerungen des Seils in einem Dämpfer ausgeführt wird, der an dem Seil angeordnet ist, um dessen Transversal-Schwingungen zu dämpfen.

2. Verfahren nach dem vorhergehenden Anspruch, wobei die Messung der Normal-Zug-Belastung in dem Seil direkt ausgeführt wird, beispielsweise mit Hilfe einer Belastungs-Messzelle.

3. Verfahren nach Anspruch 1, wobei die Messung der Normal-ZugBelastung in dem Seil indirekt ausgeführt wird, beispielsweise mit Hilfe von einem Dehnungsmessstreifen, der an der Verankerung oder an dem Seil angeordnet ist, mit Hilfe einer Kraft-Messung an einem Strang unter einer Mehrzahl von Strängen des Seils, oder auch durch die Methode der schwingenden Saite, und mit Hilfe einer Messung der Eigenfrequenzen der Schwingung des Seils.

4. Verfahren nach einem der vorhergehenden Ansprüche, wobei die Messungen für den Zug oder/und die Biegung mit einer Frequenz in der Größenordnung von 1 Hz bis 1 kHz ausgeführt werden.

5. Verfahren nach einem der vorhergehenden Ansprüche, wobei der Mess-Schritt nicht kontinuierlich seit der Installation des Seils durchgeführt wird, und wobei die gemessenen Daten verwendet werden, um eine Extrapolation der Belastungen vor und nach der Mess-Dauer durchzuführen.

6. Verfahren nach einem der vorhergehenden Ansprüche, wobei der Mess-Schritt kontinuierlich seit der Installation des Seils durchgeführt wird, um die Zug- und Biege-Belastungen in dem Seil seit dessen Installation zu messen.

7. Verfahren nach einem der vorhergehenden Ansprüche, wobei der ZählSchritt mit Hilfe einer Zählung vom Wassertropfen-Typ durchgeführt wird.

8. Verfahren nach einem der vorhergehenden Ansprüche, wobei der zeitliche Verlauf oder die Extrapolation der vergangenen Belastungen verwendet wird, um die Ermüdung, der das Seil tatsächlich ausgesetzt war bzw. ist, mit den zur Zeit seiner Konstruktion vorhergesagten Hypothesen zu vergleichen.

9. Verfahren nach einem der vorhergehenden Ansprüche, wobei die Extrapolationen der zukünftigen Belastungen verwendet werden, um eine Kapazität oder eine verbleibende Lebensdauer des Seils im Hinblick auf die Ermüdung abzuschätzen.

10. Einrichtung, die es ermöglicht, das Ermüdungskapital eines Seils (2) zu bestimmen, welches eine Bauwesen-Struktur (1) abstützt oder trägt, wobei die Einrichtung Mittel zum Umsetzen eines Verfahrens nach einem der vorhergehenden Ansprüche umfasst, nämlich umfassend:
- Mess-Mittel (8) für die globale Zug-Belastung in dem Seil (2),
- Mess-Mittel (10) für die globale Biege-Belastung in dem Seil (2) vermittels eines Sensors, der in einem Dämpfer integriert ist, den eine Einrichtung zur Verankerung des Seils an der Bauwesen-Struktur umfasst,
- Zähl-Mittel (12) für die Anzahl von Belastungszyklen in Abhängigkeit von der Amplitude der Zug- und Biege-Belastungen, denen das Seil ausgesetzt ist,
Vergleichs-Mittel (14) zum Vergleichen der durch die Zähl-Mittel ausgeführten Zählung mit einer zuvor für das Seil etablierten Kurve vom Wöhler-Typ.

11. Einrichtung nach Anspruch 10, weiter umfassend Alarm-Mittel (16), welche es erlauben, automatisch informiert zu werden, wenn die Kapazität des Seils oder seine verbleibende Lebensdauer unter einen vorbestimmten Schwellenwert reduziert wird.

## Claims

1. Method for determining the fatigue capital of a cable supporting a civil engineering structure, wherein the method comprises:
- a measurement step (S1, S2) during which the normal tensile force on the cable and the bending force on the cable are synchronously measured so as to obtain the compound force on the cable;
- a counting step (S3) during which, based on the measured compound forces, a count of the stress cycle number as a function of the amplitude of the force is realized;
- a step of evaluating the fatigue capital of the cable (S4), during which the fatigue capital of the cable is determined by comparing the count carried out during the counting step with a Wöhler-type curve that has been previously determined for the cable,
wherein measurement of the bending force on the cable is realized indirectly, for example based on a measurement of cable movements in a plane intersecting its axis and at a known distance from the anchorage, and wherein the measurement of cable movements is realized in a damper placed on the cable to dampen transverse vibrations.

2. Method according to the preceding claim, wherein measurement of the normal tensile force on the cable is realized directly, for example, by means of a load cell.

3. Method according to claim 1, wherein measurement of the normal tensile force on the cable is realized indirectly, for example, by the use of a strain gauge placed on the anchor or on the cable, by measuring the force on one among a plurality of cable strands, or by the vibrating chord method and using measurement of normal frequencies of vibration of the cable.

4. Method according to any one of the preceding claims, wherein tensile and/or bending measurements are realized at a frequency on the order of 1 Hz to 1 kHz.

5. Method according to any of the preceding claims, wherein the measurement step is not realized continuously from the moment of cable installation, and wherein the measured data are used to extrapolate from loads before and after the measurement period.

6. Method according to any one of the preceding claims, wherein the measurement step is realized continuously from the time of cable installation so as to measure the tensile and bending forces on the cable from the time of its installation.

7. Method according to any one of the preceding claims, wherein the counting step is realized by means of rainflow counting.

8. Method according to any one of the preceding claims, wherein the history or extrapolation of past loads is used to compare the fatigue actually experienced by the cable with the assumptions made at the time of construction.

9. Method according to any one of the preceding claims, wherein extrapolations of future loads are used to estimate a capacity or residual lifetime of the cable with respect to fatigue.

10. Device for determining the fatigue capital of a cable (2) supporting a civil engineering structure (1), wherein the device comprises means for implementing a method according to any one of the preceding claims, that is, comprising:
- means for measuring the overall tensile force (8) on the cable (2);
- means for measuring the overall bending force (10) on the cable (2) using a sensor integrated in a damper forming part of an anchoring device of the cable on the civil engineering structure;
- means for counting (12) the number of stress cycles as a function of the amplitude of tensile and bending forces experienced by the cable; and
- means for comparing (14) the counting carried out by the counting means with a Wöhler-type curve previously established for the cable.

11. Device according to claim 10, further comprising alert means (16) for automatic notification whenever the cable's capacity or its residual lifespan is reduced below a predetermined threshold.
